# EUROPÄISCHE PATENTSCHRIFT

(11) **EP 3 129 762 B1**
(45) Veröffentlichungstag und Bekanntmachung des Hinweises auf die Patenterteilung: **03.07.2019**
(21) Anmeldenummer: 15725503.5
(22) Anmeldetag: 10.04.2015
(51) Int. Cl.: G01N 1/32, B24B 41/06, B24B 49/04, B23Q 1/58, B23Q 5/34, B24B 49/12, B24B 47/04

(54) **PROBENTRÄGER UND VERFAHREN ZUM BEARBEITEN EINER PROBE**
SAMPLE CARRIER AND METHOD FOR PROCESSING A SAMPLE
PORTE-ÉCHANTILLON ET PROCÉDÉ PERMETTANT DE FAIRE FONCTIONNER UN PORTE-ÉCHANTILLON

(30) Priorität: 11.04.2014 DE 102014005689
(43) Veröffentlichungstag der Anmeldung: 15.02.2017
(73) Patentinhaber: Technische Universität Berlin, 10623 Berlin (DE)
(72) Erfinder: SELVE, Sören, 10623 Berlin (DE)
(74) Vertreter: Gulde & Partner
(86) Internationale Anmeldenummer: PCT/EP2015/057877
(87) Internationale Veröffentlichungsnummer: WO 2015/155347

(56) Entgegenhaltungen:
- CN-A- 1 726 116
- DE-A1-102009 052 250
- JP-A- 2008 290 192
- JP-A- 2010 194 637

## Beschreibung

Die Erfindung betrifft einen Probenträger und ein Verfahren zum Bearbeiten einer Probe. Insbesondere betrifft die vorliegende Erfindung einen Probenträger zur Herstellung geeigneter Probenpräparate für die Transmissionselektronenmikroskopie (TEM) oder sonstigen auf Dünnschichtpräparaten beruhenden Analyseverfahren wie beispielsweise der Rasterelektronenmikroskopie (REM).

### Technologsicher Hintergrund der Erfindung

TEM-Präparate besitzen üblicherweise Dicken von einigen Nanometern, um für Elektronen transparent zu sein. Je nach zu untersuchendem Material und Fragestellung kommen dabei unterschiedliche Präparationstechniken zum Einsatz. Zu den herkömmlichen Methoden zählen dabei das Auftragen einer nanoskaligen Suspension auf spezielle TEM-Trägernetze sowie die Pulverpräparation, bei der die zu untersuchende Probe als fein zerstäubtes Pulvermaterial vorliegt. Eine andere Möglichkeit zur Präparation extrem dünner Schichten besteht bei spalt- bzw. schneidbaren Probenmaterialen. Mit der sogenannten Kleinwinkelspaltungstechnik (Small-Angle-Cleaving-Technique - SACT) können von kristallinen Materialien dünne Schichten entlang der Netzebenen eines Materials erzeugt werden, während bei der Ultramikrotomie beispielsweise amorphe biologische Proben von einem Gießharz eingebettet zunächst in eine feste, schneidbare Form gebracht und anschließend in einem Ultramikrotom oberflächlich zerspant werden.

Die genannten Methoden werden ergänzt durch verschiedene Verfahren zum gezielten Abdünnen einzelner Materialbereiche der Proben. Dieses Abdünnen kann auf verschiedenen Wegen erfolgen, so ist für metallische Materialien elektrolytisches Abdünnen weit verbreitet. Auch chemisches Ätzen oder die Bearbeitung mittels eines fokussierten lonenstrahls (Focused Ion Beam - FIB) ist üblich. Für viele Materialien können auch rein mechanische Verfahren beispielsweise mittels Feinschleif- und Feinpoliturscheiben unter eventueller Zuhilfenahme eines Poliermittels angewendet werden.

Im Laufe der letzten Jahre wurden viele dieser Methoden immer weiter verbessert und optimiert. Neben kommerziell erhältlichen Spezial-Apparaturen zum Abdünnen sind auch Hilfsmittel zur manuellen mechanischen Feinpoliturbearbeitung bekannt. Mit Ausnahme der Ultramikrotomie, der Spalttechnik und dem elektrolytischen Dünnen verwenden allerdings alle aus dem Stand der Technik bekannten Verfahren eine lonendünnung zur abschließenden Feinpolitur der erzeugten Dünnschicht-Probenoberflächen. Dabei kommt es teilweise jedoch zu einer erheblichen Amorphisierung eventuell vorhandener kristalliner Bereiche. Diese amorphen Schichten führen u.a. zu starkem Rauschen in den TEM-Aufnahmen. Materialbedingt kann zudem unter Einwirkung des Elektronenstrahls eine Rekristallisierung auftreten, wodurch die Interpretierbarkeit des untersuchten Objektes erheblich erschwert wird. Es ist daher das Ziel einer jeden Probenpräparation, die Entstehung solcher amorphen Schichten zu vermeiden. Zudem kommt es durch den zusätzlichen lonenbeschuss und das Ätzen zu ungewünschten Artefakten, die eine Interpretation der TEM-Ergebnisse erheblich erschweren können.

Obwohl eine mittels lonendünnung bearbeitete Probenoberfläche eine extrem geringe Oberflächenrauigkeit aufweist, sollte ein Einsatz wegen der genannten Probleme möglichst vermieden werden. Die genannten Spalt- und Schneidverfahren kommen weitgehend ohne den zusätzlichen Einsatz einer lonendünnung (oder FIB im Speziellen) aus, können jedoch nicht bei allen Probenarten und können stark eingeschränkt für ortsaufgelöste Untersuchungen eingesetzt werden. Damit stehen für die überwiegende Mehrzahl von Proben vor allem die verschiedenen mechanischen Abrasionsverfahren im Vordergrund.

Eine der gängigsten Poliermethoden ist das maschinelle mechanische Abdünnen von Proben mittels eines auf die Probe aufgesetzten rotierenden Schleifrades. Um dabei einen möglichst homogenen Materialabtrag zu erzeugen, wird die Probe zusätzlich kontinuierlich unter dem Schleifpunkt gedreht, so dass der abgedünnte Bereich ein konkaves Muldenprofil ausbildet. Die Größe der erzeugten Mulden hängt dabei vor allem von der Größe und Dicke des Schleifrades sowie seiner Position bezüglich der Probenoberfläche ab.

Ein wesentlicher Nachteil solcher Muldenschleifer ist jedoch die Tatsache, dass die Dicke der mittels eines solchen Muldenschleifers abgedünnten Probenstellen nicht homogen ist und somit eine ideale Abbildung mittels TEM nur innerhalb eines sehr kleinen Bereichs um die Muldenmitte bzw. den inneren Muldenrand erfolgen kann. Insbesondere für ortsaufgelöste Untersuchungen an konkreten Bereichen von Materialproben ist ein solches Verfahren aufgrund des erheblichen Aufwandes bei der Präparation sehr zeitintensiv. Besonders an inhomogenen Proben gelingt es darüber hinaus oft nicht, die gewünschten Stellen gezielt zu präparieren.

Aus der JP 2008 290192 A, die den Oberbegriff des Anspruchs 1 offenbart, ist eine Polieranordnung mit einem in vertikaler Richtung linear oszillierenden Tisch und einer rotierenden Antriebsachse bekannt, wobei die Rotation der Antriebsachse mittels eines Exzenterrades in die lineare Oszillationsbewegung des Tisches überführt wird. Die JP 2010 194637 A offenbart ebenfalls eine Polieranordnung mit einem in vertikaler Richtung linear oszillierenden Tisch und einer rotierenden Antriebsachse, wobei die Rotation der Antriebsachse mittels eines Exzenterbolzens in die lineare Oszillationsbewegung des Tisches überführt wird.

Der Erfindung liegt daher die Aufgabe zugrunde, einen Probenträger zum Abdünnen mittels maschineller mechanischer Feinpolitur zur Verfügung zu stellen, der eines oder mehrere der geschilderten Probleme des Standes der Technik beim Herstellen geeigneter Probenpräparate für die Transmissionselektronenmikroskopie (TEM) vermeidet oder zumindest deutlich mindert. Insbesondere soll ein Verfahren zum Abdünnen von Proben für die TEM bereitgestellt werden, das ohne den Einsatz eines FIB oder lonendünnung im Allgemeinen auskommt und durch einen großflächigen Materialabtrag auch die ortsaufgelöste Untersuchung von inhomogenen Proben nach nur einem Präparationsvorgang ermöglicht.

### Zusammenfassung der Erfindung

Die genannte Aufgabe wird mit Hilfe des erfindungsgemäßen Probenträgers nach Anspruch 1 gelöst. Die Erfindung stellt einen Probenträger zum Bearbeiten einer Probe zur Verfügung. Dieser umfasst einen Auflagesockel, einen Schlitten mit einem Aufnahmebereich für die Probe, wobei der Schlitten auf dem Auflagesockel abgestützt ist, eine Führung, wobei der Schlitten entlang der Führung beweglich angeordnet ist, eine um eine Drehachse exzentrisch drehbewegliche Scheibe, die mit dem Schlitten wirkverbunden ist, wobei ein Schwerpunkt der Scheibe außerhalb der Drehachse liegt, und ein Antriebsrad. Weiterhin weist der Schlitten eine Öffnung in seinem Aufnahmebereich auf, wobei in der Öffnung eine Probenunterlage angeordnet ist, wobei die Probenunterlage in mindestens einem optischen Spektralbereich transparent ist. Auch weisen die Scheibe und ein Antriebsrad jeweils eine Öffnung auf, wobei eine gemeinsame Achse als Sichtachse durch die Öffnung des Schlittens, durch die Öffnung der Scheibe und durch die Öffnung des Antriebsrads verläuft.

Bei diesem Schwerpunkt kann es sich insbesondere um den geometrischen Schwerpunkt der Scheibe handeln, der sich mathematisch durch eine Mittelung der räumlichen Position aller Randpunkte der Scheibe errechnen lässt. Der geometrische Schwerpunkt kann bei inhomogenen Scheibenmaterialien deutlich vom Massenmittelpunkt der Scheibe abweichen. Durch eine geschickte Zusammenstellung der Scheibenmaterialien können dadurch insbesondere die Drehachse der drehbeweglichen Scheibe und die Hauptträgheitsachse der Scheibe durch den Massenmittelpunkt zur Vermeidung einer Unwucht zusammengelegt werden.

Der Erfindung liegt die Erkenntnis zugrunde, dass die von einem konventionellen Muldenschleifer erzeugten Mulden aufgrund des eingesetzten Feinschleifverfahrens zwar eine ausreichend geringe Oberflächenrauigkeit aufweisen und damit der Einsatz einer lonendünnung bei Abdünnen vermieden werden kann, jedoch durch die dabei standardmäßig eingesetzte Probenrotation lediglich eine punktuelle Bearbeitung, d.h. Muldenformung durch Abrasion, ermöglicht wird. Erfolgt der zugrunde liegende Schleifvorgang jedoch nicht auf Grundlage einer solchen zirkularen oder elliptischen Bewegung, sondern wird dieser Schleifvorgang stattdessen aus einer Linearbewegung heraus durchgeführt, so ergibt sich ein vorwiegend keilförmiges Schleifprofil mit einer ausgedehnten Kante entsprechend dem Bewegungsspielraum des dabei verwendeten Probenhalters.

In bevorzugter Ausgestaltung der Erfindung ist vorgesehen, dass ein drehbar gelagertes und rotatorisch angetriebenes Antriebsrad in direkter oder indirekter Wirkverbindung mit einer drehbeweglichen Scheibe steht, so dass die vorzugsweise symmetrische Rotationsbewegung des Antriebsrades in eine exzentrische Rotation der drehbeweglichen Scheibe überführt wird, wobei beide Komponenten eine gemeinsame Drehachse aufweisen. Das Antriebsrad kann konisch geformt sein, um eine genauere Positionierung des Probenträgers zu ermöglichen. Bei der drehbeweglichen Scheibe kann es sich bevorzugt um eine außerhalb seiner geometrischen Mitte rotierende Kreisscheibe handeln. In einer anderen bevorzugten Variante kann es sich bei der drehbeweglichen Scheibe um eine ellipsenförmig geformte Struktur handeln. Die Rotationsachse kann dabei in einem oder außerhalb der beiden Brennpunkte liegen. In einer weiteren bevorzugten Variante der drehbeweglichen Scheibe kann deren äußere Kontur auch einer beliebigen Freiform entsprechen. Sollte bereits das Antriebsrad selbst die gewünschte exzentrische Bewegung liefern können, so kann auf eine zusätzliche drehbewegliche Scheibe verzichtet werden. Die genaue Art der Wirkverbindung zwischen dem Antriebsrad und der drehbeweglichen Scheibe kann an spezielle Erfordernisse des Aufbaus angepasst werden. In einer bevorzugten Variante der Wirkverbindung handelt es sich eine magnetische Wechselwirkung zwischen beiden Komponenten. Dazu weisen die drehbewegliche Scheibe und/oder das Antriebsrad zumindest teilweise ein magnetisches bzw. magnetisierbares Material auf. Dies ermöglicht eine genaue Positionierung sowie eine feste, jedoch lösbare Verbindung zwischen den einzelnen Komponenten.

Vorzugsweise weisen sowohl das Antriebsrad als auch die drehbewegliche Scheibe jeweils eine einheitlich Dicke im mm-Bereich auf (vorzugsweise zwischen 1 und 50 mm, bevorzugter zwischen 1 und 25 mm, noch bevorzugter zwischen 1 und 10 mm und besonders bevorzugt zwischen 1 und 5 mm). Die laterale Ausdehnung der beiden rotatorischen Elemente ist ungefähr gleich und liegt vorzugsweise im cm-Bereich (vorzugsweise zwischen 1 und 50 cm, bevorzugter zwischen 1 und 20 cm, noch bevorzugter zwischen 1 und 10 mm und besonders bevorzugt zwischen 1 und 3 cm). Besonders bevorzugt ist dabei ein Größenverhältnis der maximalen lateralen Abmessungen von Antriebsrad und drehbeweglicher Scheibe zwischen 0.2 und 5 (bevorzugter zwischen 0.5 und 2). Vorzugsweise sind die Ober- und/oder Unterseiten des Antriebsrads und/oder der drehbeweglichen Scheibe vollständig planar ausgebildet.

Die drehbewegliche Scheibe ist erfindungsgemäß zumindest teilweise von einem ortsfesten Auflagesockel umschlossen, in dem ein beweglicher Schlitten direkt oder indirekt durch eine entsprechende Führung abgestützt ist. Bei der Führung kann es sich beispielsweise um ein einfaches Gleitlager oder ein Wälzlager handeln. Der Schlitten steht wiederum in direkter oder indirekter Wirkverbindung mit der drehbeweglichen Scheibe, so dass deren bevorzugt exzentrische Rotation mittels dieser Wirkverbindung in die durch die Führung des Auflagensockels vorgegebene oszillatorische Bewegungsform bzw. Raumtrajektorie überführt wird. Besonders bevorzugt ist hierbei eine direkte Wirkverbindung durch Reibkopplung vorwiegend zwischen den Punkten auf der drehbeweglichen Scheibe mit maximalem Abstand von der Drehachse und den senkrecht zur Bewegungsrichtung des Schlittens liegenden Unterkanten des Schlittens. In einer besonders bevorzugten Ausführungsform wird dabei die rotatorische Bewegung des Antriebsrades durch die exzentrisch rotierende drehbewegliche Scheibe in eine lineare Bewegung des Schlittens in einer Ebene überführt.

In einer weiteren bevorzugten Variante kann jedoch von der rein linearen Bewegungsform abgewichen werden, so dass beispielsweise zusätzliche Oszillationen quer zur Bewegungsrichtung des Schlittens überlagert werden können. Auch kann durch eine entsprechende Anpassung der äußeren Konturen der drehbeweglichen Scheibe als Freiform oder eine alternative Ausgestaltung einer indirekten Wirkverbindung zwischen drehbeweglicher Scheibe und Schlittenunterseite in einer weiteren bevorzugten Ausgestaltung die Richtung und Geschwindigkeit der erzeugten Translationsbewegung erfindungsgemäß beeinflusst werden. Die Materialien für den Auflagesockel, die Führung und den Schlitten können frei nach Bedarf gewählt werden, bevorzugt ist jedoch eine Ausführung aus metallischen Werkstoffen. Diese sollten im Falle einer magnetischen Wirkverbindung zwischen den Rotationselementen vorzugsweise amagnetische Eigenschaften aufweisen.

Im oberen Teil des Schlittens ist bevorzugt ein Aufnahmebereich für eine Probenunterlage, welche zum Aufbringen der Probe vorgesehen ist, vorhanden. Dieser Aufnahmebereich kann eine Öffnung aufweisen, die passgenau mit einer entsprechenden Probenunterlage so abschließt, dass bevorzugt ein Teil der Probenunterlage aus der Öffnung des Schlittens herausragt. Dadurch wird während des Polierens sowohl der Schlitten als auch die Probe vor einer versehentlichen Kontamination durch Fremdmaterialabrieb geschützt.

Besonders bevorzugt ist die Probenunterlage vollständig aus einem optisch transparenten Material, insbesondere Silikat- bzw. Borosilikatglas, geformt. Dabei bedeutet optisch transparent hohes Transmissionsvermögen T > 10 %, bevorzugt T > 50 %, besonders bevorzugt T > 90 %, für elektromagnetische Strahlung bestimmter Regionen aus dem spektralen Bereich zwischen Ultraviolett (UV) und Infraroten (IR), insbesondere jedoch aus dem Bereich des sichtbaren Spektrums (380 bis 760 nm). Weiterhin befinden sich in dieser bevorzugten Ausgestaltung der Erfindung mindestens eine Öffnung jeweils im Auflagesockel, in der drehbeweglichen Scheibe und im Antriebsrad, so dass sich eine gemeinsame Sichtachse ergibt, durch welche eine von unten gerichtete Durchstrahlung des auf der transparenten Probenunterlage befindlichen Probenkörpers für Mikroskopiezwecke zur prozessintegrierten Kontrolle erfolgen kann.

Das erfindungsgemäße Abdünnen der Proben erfolgt durch Einsatz einer mechanischen Schleif- bzw. Poliereinheit, bei dem ein rotierendes Schleifrad oberhalb der Probenoberfläche an den Probekörpern abrasiv angreift. In einer bevorzugten Ausgestaltung dieser Anordnung zeigt die Drehachse des Schleifrades in Richtung der Bewegung des Schlittens, in einer weiteren bevorzugten Ausgestaltung kann diese Drehachse einen Winkel mit der Bewegungsrichtung des Schlittens einschließen. Vorzugsweise sind dabei Winkel von kleiner als 50°, besonders bevorzugt Winkel von kleiner als 10°, vorgesehen. Vorzugsweise umfasst eine erfindungsgemäße Vorrichtung zur Bearbeitung einer Probe einen erfindungsgemäßen Probenträger zum Bearbeiten einer Probe und eine Schleifeinheit. Vorzugsweise kann dabei eine Drehachse der Schleifeinheit einen Winkel von größer als 10° zur Drehachse der drehbeweglichen Scheibe und/oder senkrecht zur Drehachse des Antriebsrads einschließen.

Der erfindungsgemäße Probenhalter ist für die Verwendung verschiedenster Festkörpermaterialien als Probenkörper ausgelegt. Dabei können in der Regel alle für das konventionelle Muldenschleifen verwendbaren Materialien genutzt werden. Dabei kann es sich beispielsweise um Proben aus (bulk)-Si, -LiFePO₄ und -GaP handeln. Weitere (bulk)-Probenmaterialien sind beispielsweise GaAs (kristallin, weich, spröde), Saphir (kristallin, hart) und SiO₂ (amorph).

In weiterer bevorzugter Ausgestaltung der Erfindung ist vorgesehen, dass sich die Drehachsen des rotatorisch angetriebenen Antriebsrades und der damit in direkter oder indirekter Wirkverbindung stehenden drehbeweglichen Scheibe voneinander unterscheiden können. Bei dieser Ausgestaltungsform bestehen jedoch die gleichen funktionalen Zusammenhänge zwischen den einzelnen Komponenten der Probenhalterung. Die genannte Wirkverbindung zwischen den beiden rotatorischen Komponenten kann beispielsweise über eine gegenseitige Verzahnung oder eine sonstige Kopplung mittels Riemen, Rollen oder entsprechender Gestänge erfolgen. Eine derartige Wirkverbindung erlaubt eine größere Flexibilität bei der Ausgestaltung der erfindungsgemäßen Bewegungsformtransformation, insbesondere kann eine Über- oder Untersetzung der Drehgeschwindigkeiten bzw. eine entsprechend abgestufte oder stufenlose Getriebeschaltung zwischen den Elementen vorgesehen werden.

In weiterer bevorzugter Ausgestaltung der Erfindung ist vorgesehen, dass nach dem Bereitstellen einer Probe auf einer Probenunterlage ein translatorisches Bewegen der Probe in einer ersten Ebene und ein Schleifen der Probe erfolgt, wobei eine Schleifeinheit innerhalb einer zweiten Ebene bewegt wird, wobei die zweite Ebene mit der ersten Ebene einen Winkel von größer als 50° einschließt. Die nach diesem Verfahren präparierte Probe kann direkt mittels TEM untersucht werden und zusätzliche Bearbeitungsschritte (wie bei konventionellen Verfahren erforderlich) können entfallen. Insbesondere besteht keine Notwendigkeit für ein weiteres Abdünnen bzw. eine Feinpolitur mittels lonendünnung oder FIB vor der TEM Untersuchung. Vorzugsweise umfasst ein erfindungsgemäßes Verfahren zum Bearbeiten einer Probe das Bereitstellen einer erfindungsgemäßen Vorrichtung zur Bearbeitung einer Probe, das Anordnen einer Probe auf der Probenunterlage, das translatorisches Bewegen der Probe in einer ersten Ebene, und das Schleifen der Probe, wobei die Schleifeinheit innerhalb einer zweiten Ebene bewegt wird, wobei die zweite Ebene mit der ersten Ebene einen Winkel von größer als 50° einschließt.

Gemäß einem Aspekt der vorliegenden Erfindung wird ein Keilschleifaufsatz (auch als Probenträger bezeichnet) offenbart, der als Präparationshilfe zum Anfertigen von transmissionselektronenmikroskopischen Präparaten aus Feststoffen verwendet werden kann. Mit Hilfe des Keilschleifaufsatzes können Präparate hergestellt werden, die ohne weiteres lonenstrahlätzen auskommen. Da die vorhandenen konventionellen Präparationshilfen Verwendung finden können, ist der Aufsatz so konzipiert, dass dies mit einem minimalen Aufwand möglich ist. So ist konkret am konventionellen Dimple-Grinder (auch als Schleifeinheit bezeichnet) keine Veränderung nötig, lediglich die Standard-(Pyrex)-Glasträger (Ø = 10 mm, Höhe = 10 mm) müssen in der Höhe angepasst werden. Um die Rotation des Tisches (auch als drehbewegliches Antriebsrad bezeichnet) in eine Translationsbewegung zu überführen, wird ein Exzenterrad (auch als drehbewegliche Scheibe bezeichnet) auf den Drehteller (auch als drehbewegliches Antriebsrad bezeichnet) des Dimple-Grinders aufgesetzt. Dieses greift in den Probentisch des Keilschleifaufsatzes (auch als Schlitten bezeichnet) ein und schiebt ihn somit vor und zurück.

Dies ist notwendig, damit sich keine Schleifrillen bilden, sondern ein gleichmäßiger glatter Abtrag entsteht. Je nach Position des Exzenterrades, ist die Auslenkung der Tischbewegung auf die Probengröße einstellbar. Der Drehteller (auch als drehbewegliches Antriebsrad bezeichnet) des Dimple-Grinders ist stark ferromagnetisch, so dass ein aus einfachem Stahl gefertigtes Exzenterrad auf einfache Weise hält, positionierbar ist und sich während des Arbeitsganges nicht verschiebt. Die gesamte Konstruktion des Aufsatzes passt auf den konisch geformten Sockel des Dimple-Grinders und kann somit leicht abgenommen und wieder aufgesetzt werden, ohne dabei die vorher gemachten Einstellungen zu verlieren.

Justiermarken auf dem Probentisch und auf dem Glasträger (auch als Probenunterlage bezeichnet) ermöglichen ein einfaches Positionieren des Probenmaterials, sodass dieses immer an der Stelle sitzt, an dem es auch mit dem Schleifrad in Kontakt kommt. Durch die Längsbewegung des Tisches unter dem sich drehenden Schleifrad würde eine Furche auf der Probe entstehen. Die eine Seite würde dabei "in Drehrichtung" abgeschliffen, die andere Seite "gegen die Drehrichtung". Dabei würden sich von dem in Gegenrichtung befindlichen Probenbereich Bruchstücke lösen und die gesamte Probe zerkratzen oder sogar zerstören. Daher muss das Schleifrad also immer direkt auf der Kante der Probe arbeiten, damit sich keine Bruchstücke lösen.

Ob der gewünschte Probenbereich bereits ausreichend dünn poliert ist, kann bei Standardmaterialien wie Silizium leicht lichtoptisch überprüft werden, anhand der Rotfärbung. Dazu besitzt der Probentisch ein Loch (auch als Öffnung des Schlittens bezeichnet), ebenso das Exzenterrad (auch als Öffnung der drehbeweglichen Scheibe bezeichnet), um somit das Licht der im Dimple-Grinder befindlichen Durchlichtquelle dafür zu nutzen. Materialien mit Dicken im Nanometerbereich zeigen zudem Interferenzlinien, die gut im Lichtmikroskop zu beobachten sind. Für diese notwendigen Überprüfungen kann der Glasträger samt Probe entnommen und untersucht werden. Anschließend kann er entlang der Positionsmarken an gleicher Stelle wieder eingesetzt werden und wenn nötig weiterbearbeitet werden. Ist das Präparat an den gewünschten Stellen dünn, wird es vom Glasträger abgelöst, gereinigt und kann dann bereits im TEM untersucht werden.

Mit einem Prototyp des Keilschleifaufsatzes und dem konventionellen Gatan-Dimpler Model 656 sind erste Testpräparate von (bulk)-Si, -LiFePO₄ und -GaP gefertigt worden. Die Präparation mit wasserhaltigen Poliersuspensionen kann allerdings im Fall von Si zu einer starken amorphen Schicht führen, durch Bildung von oberflächigem SiO₂. Dementsprechend sollten für leicht oxidierbare Stoffe keine wasserbasierenden Poliersuspensionen verwendet werden. Eine ungenügend gereinigte Oberfläche kann zudem bei GaP zu starker Kontaminationsbildung unter Elektronenstrahleinwirkung führen. Diese kann jedoch durch einige Minuten Plasma-Cleaning leicht vermieden werden - ein Schritt, der sich für die meisten Präparate empfiehlt und aufgrund der verwendeten geringen Elektronenenergie auf die Struktur des Präparates keinen Einfluss hat. Trotz der genannten Beeinträchtigungen wurden an allen Präparaten Bereiche gefunden, die für Hochauflösungsaufnahmen (HRTEM) geeignet und damit dünn genug sind. Die HRTEM-Aufnahmen wurden an einem konventionellen TECNAI G²20 mit 200 kV Beschleunigungsspannung und LaB₆-Emitter durchgeführt. Das Auflösungslimit des Geräts liegt bei 0.2 nm und ist daher für die Beurteilung der Hochauflösbarkeit sehr gut geeignet, da die typischen Strukturgrößen genau in dieser Dimension liegen - ist das Präparat schlecht, sind auch keine Strukturen im TEM erkennbar.

Weitere Materialien unterschiedlicher Härte und Kristallinität können verwendet werden, beispielsweise GaAs (kristallin, weich, spröde), Saphir (kristallin, hart), SiO₂ (amorph) und einige polykristalline Metalle und Legierungen.

Für den Keilschleifaufsatz ergeben sich weitere bevorzugte Ausführungsvarianten. Eine leichte Oszillation des Präparates während des Schleifens und Polierens um wenige Grad kann sich positiv auf die Politur auswirken. Der Fuß des Aufsatzes sollte im Durchmesser variabel gestaltet werden, so dass er sich an fertigungsbedingte unterschiedliche Sockeldurchmesser einer Schleifeinheit (z.B. des Gatan Dimple-Grinders) adaptieren lässt. Eine weitere Ausführungsvariante des Exzenterrades kann die Geschwindigkeit erhöhen, mit der sich der Tisch lateral bewegt und somit die Verweilzeit des Schleifrades an den jeweiligen Umkehrpunkten des Tisches reduzieren, woraus ein gleichmäßigerer Materialabtrag resultieren würde. Exzenterräder mit unterschiedlich starker Exzentrizität können die Herstellung unterschiedlich großer Präparate (im mm-Bereich) möglich machen.

Der erfindungsgemäße Keilschleifaufsatz kann beispielsweise von Präparationslaboren verwendet werden, die eine konventionelle Schleifeinheit wie den Gatan Dimple-Grinder Model 656 verwenden. Der Keilschleifaufsatz erweitert die Funktion der konventionellen Schleifeinheit um die Möglichkeit, Keilschliffe anzufertigen und macht dabei das materialbeeinflussende lonenstrahlätzen verzichtbar. Denkbar sind auch Anwendungen im nicht-TEM-Bereich. Da auch das Rasterelektronenmikroskop (REM) von ultradünnen Präparaten profitiert (geringerer Wechselwirkungsbereich des Elektronenstrahls und damit bessere laterale Auflösung), ist der erfindungsgemäße Keilschleifaufsatz hier vorteilhaft einsetzbar.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

### Kurzbeschreibung der Figuren

Die Erfindung wird nachfolgend in Ausführungsbeispielen anhand der zugehörigen Zeichnungen erläutert. Es zeigen:
- Figur 1a: eine schematische Explosionsdarstellung eines erfindungsgemäßen Probenhalters für eine Probe 70 mit einfacher Drehachse 50;
- Figur 1b: eine schematische Schnittdarstellung des Probenhalters gemäß Figur 1a;
- Figur 2: eine schematische Explosionsdarstellung eines erfindungsgemäßen Probenhalters für eine Probe 70 mit zweifacher Drehachse 50, 75;
- Figur 3: eine schematische Darstellung eines erfindungsgemäßen Probenhalters für eine Probe 70 mit aufgesetzter Schleifeinheit 120;
- Figur 4: eine Darstellung der Bezugsebenen O, P; und
- Figur 5: die Interferenzlinien an einer mit einem erfindungsgemäßen Probenhalter für eine Probe 70 erzeugten Probenkante.

### Detaillierte Beschreibung der Erfindung

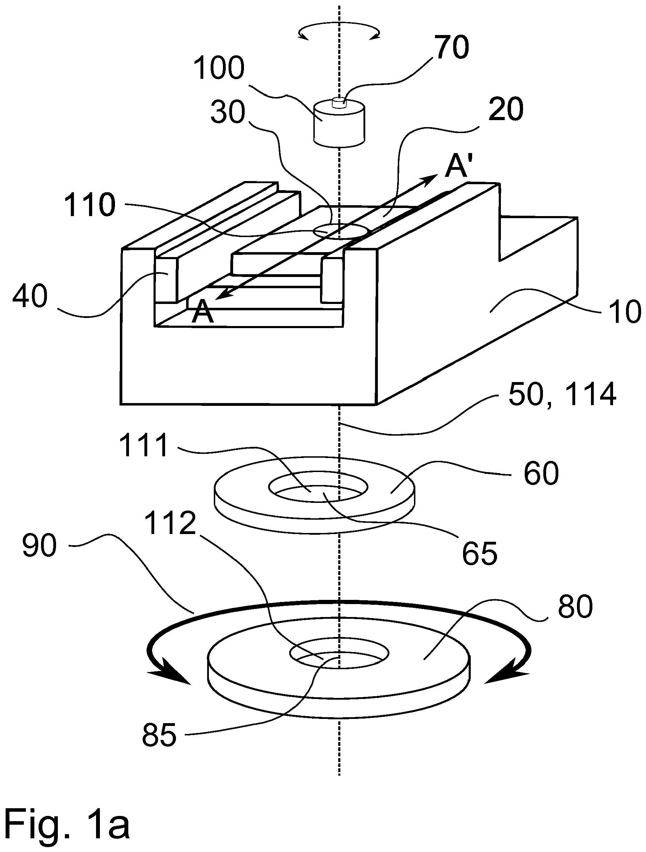

Figur 1a zeigt eine schematische Explosionsdarstellung eines erfindungsgemäßen Probenhalters für eine Probe 70 mit einfacher Drehachse 50. Das drehbewegliche Antriebsrad 80 ist um einen Schwerpunkt, hier den geometrischen Schwerpunkt 85 des kreisrunden Antriebsrades 80, auf der Drehachse 50 drehbar gelagert und mit einem rotatorischen Antrieb 90 wirkverbunden. Die Art dieser Wirkverbindung ist variabel, so kann es sich beispielsweise um einen Riemen- oder Zahnradantrieb handeln. Das Antriebsrad 80 befindet sich in direkter Wirkverbindung mit der drehbeweglichen Scheibe 60, d.h. beide Scheiben sind übereinander angeordnet und befinden sich in direktem Kontakt miteinander. Die Art dieser Wirkverbindung ist ebenfalls variabel, vorzugsweise besteht jedoch zwischen beiden Elementen 60, 80 eine feste, aber nach belieben lösbare magnetische Verbindung. Alternativ kann diese Wirkverbindung als Reib- oder Klebekupplung ausgeführt sein.

Kennzeichnend für diese Ausführungsform ist, dass ein Schwerpunkt 65 der drehbeweglichen Scheibe 60, insbesondere sein geometrischer Schwerpunkt, außerhalb der gemeinsamen Drehachse 50 liegt. In diesem Ausführungsbeispiel ist die Form der Scheibe 60 kreisförmig, andere Formen, beispielsweise elliptisch oder als beliebige Freiform, sind jedoch ebenso möglich. Aufgrund der Positionierung der Drehachse 50 außerhalb eines Schwerpunktes 65 der Scheibe 60, vorzugsweise in einem Abstand von größer als 1 %, besonders bevorzugt von größer als 10 %, der maximalen lateralen Ausdehnung der Scheibe 60, kommt es zu einer Richtungs- bzw. Drehwinkelabhängigkeit des scheinbaren Radius bezüglich der Drehachse 50. Über diese Asymmetrie kann eine drehwinkelabhängige Kopplung an ein vorzugsweise linear arbeitendes Verstellelement erreicht werden. Die Scheibe 60 wird zumindest teilweise von einem feststehenden Auflagesockel 10 umschlossen, in welchem über eine Führung 40 ein beweglicher Schlitten 20 abgestützt ist. Bei der Führung kann es sich beispielsweise um ein einfaches Gleitlager oder ein Wälzlager handeln. Der bewegliche Schlitten 20 ist mit der Scheibe 60 über vorzugsweise eine direkte Stoßkopplung so wirkverbunden, dass insbesondere eine rotierende Drehbewegung der Scheibe 60 in eine lineare Oszillationsbewegung des Schlittens 20 entlang der Richtung A - A' überführt wird. Zur Befestigung der Probe 70 befindet sich im Schlitten 20 ein Aufnahmebereich 30, der aus einer kreisförmigen Öffnung 110 des Schlittens 20 gebildet ist und in den passgenau eine Probeunterlage 100 mit darauf befindlicher Probe 70 eingesetzt werden kann. Dabei kann ein Teil der Probenunterlage oberhalb des Schlittens 20 zu dessen Schutz auch zumindest teilweise aus der Oberfläche herausragen.

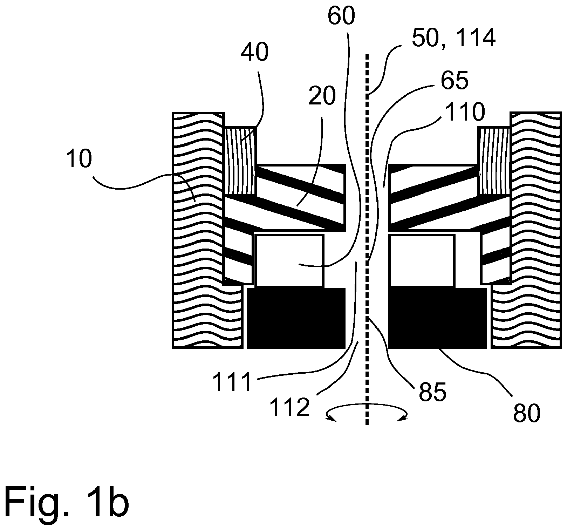

Um während der Präparationsvorgänge eine Bildgebung des Schleifvorganges zu ermöglichen, ist bei dieser Ausführungsform vorgesehen, dass die Probenunterlage 100 aus einem optisch in zumindest einem Spektralbereich transparentem Material besteht, so dass durch entsprechende Öffnungen 110, 111, 112 im Schlitten 20, im Auflagesockel 10 (nicht sichtbar), in der Scheibe 60 und im Antriebsrad 80 ein durchgehender linearer Sichtkanal 114 (hier identisch mit der gemeinsamen Drehachse 50) geformt wird, durch den beispielsweise eine Durchleuchtung der Probe 70 zur eingehenden Untersuchung mittels Präparationsmikroskopie erfolgen kann. Figur 1b zeigt eine schematische Schnittdarstellung des erfindungsgemäßen Probenhalters entsprechend der Ausführungsform nach Figur 1a. Der dargestellte Schnitt verläuft durch die Drehachse 50 und steht senkrecht auf der von Drehachse 50 und Richtung A - A' aufgespannten Ebene. Die Zuordnung der Bezugszeichen der einzelnen Komponenten entspricht weitestgehend der Beschreibung der Figur 1a. Auf eine explizite Darstellung der dort gezeigten Probenunterlage 100 sowie der Probe 70 wurde in Figur 1b aus Gründen der Übersichtlichkeit verzichtet.

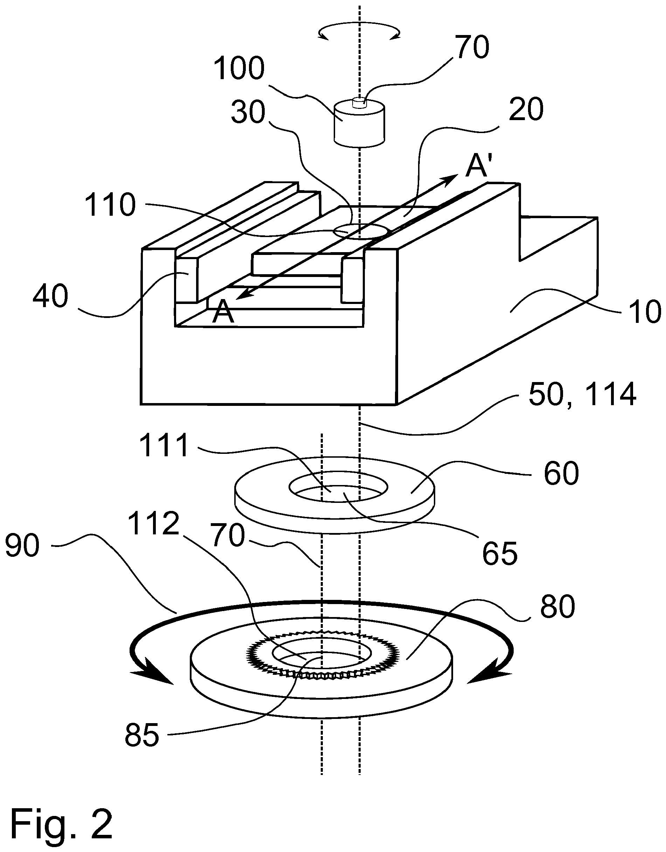

Figur 2 zeigt eine schematische Explosionsdarstellung eines erfindungsgemäßen Probenhalters für eine Probe 70 mit zweifacher Drehachse 50, 75. Die Zuordnung der Bezugszeichen sowie die funktionalen Zusammenhänge der einzelnen Komponenten entsprechend weitestgehend der Beschreibung der Figuren 1a und 1b. Wesentlicher Unterschied bei diesem Ausführungsbeispiel ist das Vorhandensein einer zweiten Drehachse 75, die durch den geometrischen Schwerpunkt 85 des Antriebsrades 80 verläuft. Eine entsprechende Wirkverbindung zwischen dem Antriebsrad 80 und der Scheibe 60 erfolgt hier beispielhaft über eine Zahnradverbindung beider Elemente. Insbesondere kann hierdurch auf einfache Art und Weise eine Übersetzung zwischen den Geschwindigkeiten der einzelnen Drehbewegungen erreicht werden. Der durchgehende Sichtkanal 114 zur Probedurchleuchtung wird hier durch einen entsprechenden Überlapp der Öffnungen 110, 111, 112 im Schlitten, im Auflagesockel 10 (nicht sichtbar), in der Scheibe 60 und im Antriebsrad 80 ermöglicht. Auch für dieses Ausführungsbeispiel ist die Darstellung zur besseren Kennzeichnung der Zusammenhänge so gewählt, dass die Drehachse 50 gerade mit der Mitte der Probenaufnahme 30 zusammenfällt. Dies stellt jedoch keine Einschränkung bei der Positionierung der einzelnen Komponenten in deren Bezug zueinander dar und kann je nach Gegebenheit oder Erfordernis beliebig davon abweichen. Durch eine entsprechende Ausgestaltung der Wirkverbindung zwischen Schlitten 20 und Scheibe 60 kann eine von der gezeigten Darstellung erheblich abweichende Positionierung der Elemente vorgenommen werden. Insbesondere kann dadurch auch erreicht werden, dass beispielsweise die zweite Drehachse 75 mit dem Mittelpunkt der Probenaufnahme 30 zusammenfällt.

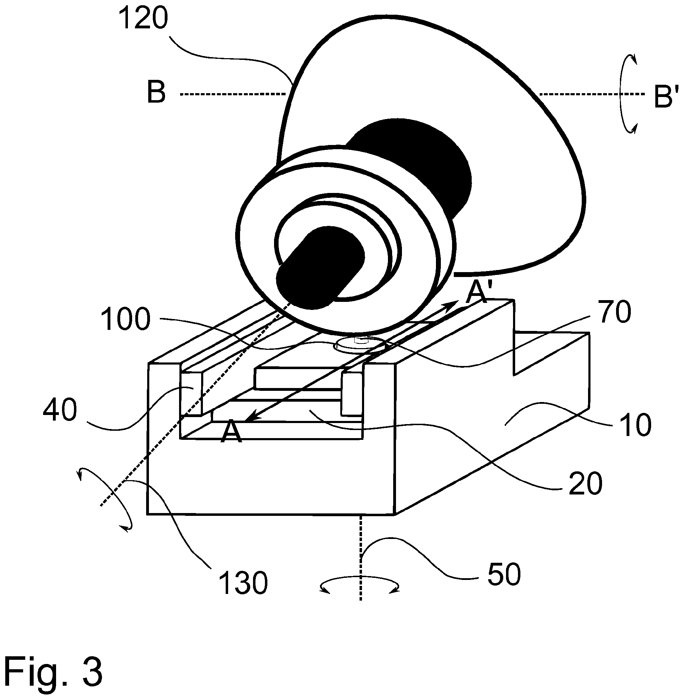

Figur 3 zeigt eine schematische Darstellung eines erfindungsgemäßen Probenhalters für eine Probe 70 mit aufgesetzter Schleifeinheit 120. Die Zuordnung der Bezugszeichen sowie die funktionalen Zusammenhänge der einzelnen Komponenten entsprechen weitestgehend der Beschreibung der Figuren 1a, 1b und 2. Auf eine Darstellung der Scheibe 60 und des Antriebsrades 80 wurde hier verzichtet. Zu erkennen ist die in den Schlitten 20 eingesetzte und leicht überstehende Probenunterlage 100 samt aufliegender Probe 70. Erfindungsgemäß führt der Schlitten eine vorzugsweise lineare Bewegung entlang der Richtung A - A' aus. Oberhalb des Probenhalters ist eine Schleifeinheit 120 in einer bevorzugten Ausrichtung zur Oberfläche der Probe 70 skizziert. Die Schleifeinheit 120 umfasst eine mit hoher Geschwindigkeit um eine Drehachse 130 rotierende Schleifscheibe, die unter einem bestimmten Winkel an einem idealerweise singulärem Kontaktpunkt kontinuierlich Material von der Probe 70 abträgt. Dieser Winkel kann beispielsweise durch eine schwenkbare Lagerung der Schleifeinheit 120, hier beispielhaft anhand einer Drehachse B - B' angedeutet, beliebig verändert werden. Die räumliche Ausrichtung der gezeigten Drehachse 130 der Schleifeinheit 120 schließt hier einen Winkel von ungefähr 45° zur Drehachse 50 der Scheibe 60 und/oder senkrecht zur Drehachse 75 des Antriebsrads 80 ein.

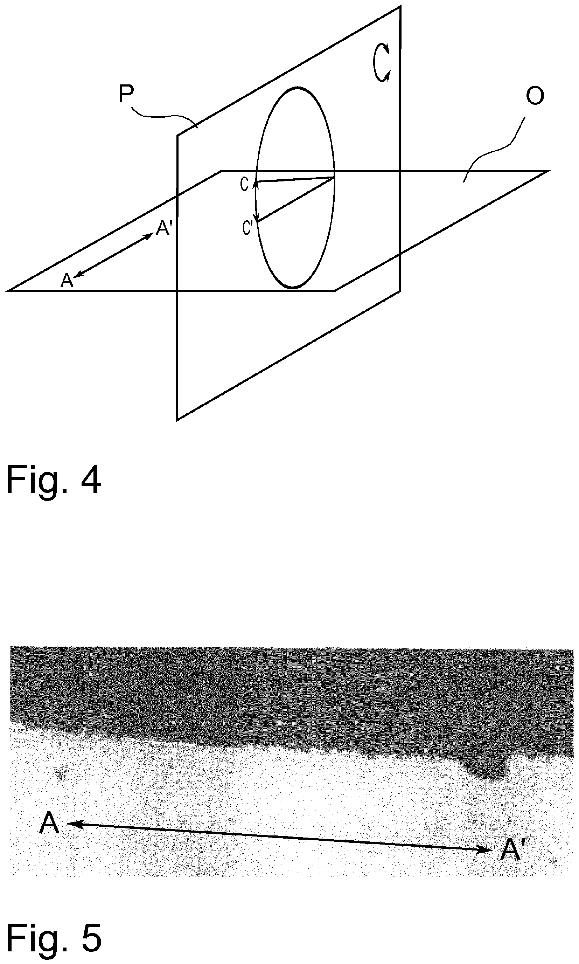

Figur 4 zeigt eine Darstellung der entsprechenden Bezugsebenen O und P. Die Oberfläche der Probe 70 wird dabei innerhalb der Ebene O translatorisch bewegt. Vorzugsweise handelt es sich dabei um eine oszillierende lineare Bewegung entlang der Richtung A - A', in einer weiteren bevorzugten Ausführungsform kann diese Bewegung jedoch auch auf beliebig gekrümmten Bahnen innerhalb der Ebene O erfolgen. Die Bewegung der Schleifeinheit 120 erfolgt hierbei in einer dazu senkrechten Ebene P. Insbesondere ist in der Ebene P eine mögliche Bewegung der Drehachse der Schleifscheibe in Richtung C - C' eingezeichnet. Die erfindungsgemäße Umsetzung des Probenhalters ist jedoch keinesfalls an die hier dargestellte Ebenenzuordnung gebunden. Insbesondere können die dargestellten Ebenen beispielsweise auch beliebig gegeneinander im Raum gekippt sein oder die Bewegungen erfolgen auf einer freien Trajektorie im Raum.

Figur 5 zeigt die Interferenzlinien an einer mit einem erfindungsgemäßen Probenhalter für eine Probe 70 erzeugten Probenkante. Die Bewegung des Schlittens im Probenträger erfolgte hierbei mit einer oszillierenden linearen Bewegung, so dass der Schleifvorgang entlang der eingezeichneten Richtung A - A' erfolgte. An der keilförmigen Schliffkante nimmt die Dicke der Probe senkrecht zur Schliffrichtung ausgehend vom dunklen Bereich kontinuierlich zu. Bei erreichbaren minimalen Dicken bis hinab im Nanometerbereich können bei Durchleuchten der zu präparierenden Proben mehr oder minder linear in Schleifrichtung angeordnete Interferenzstreifen beobachtet werden. Dieses System erlaubt einfache Rückschlüsse auf den bereits erzielten Grad der Abdünnung und die Qualität der präparierten Probe. Bei Silizium kann dies zudem auch anhand der auftretenden charakteristischen Rotfärbung des Probenmaterials bei einer lichtoptischen Überprüfung festgestellt werden. Aufgrund der parallel angeordneten linearen Interferenzstreifenmuster kann von einer sehr homogenen Abdünnung der Kante entlang der Bewegungsrichtung des Schlittens ausgegangen werden. Der variable Abstand der einzelnen Interferenzstreifen untereinander erlaubt zudem Rückschlüsse auf das von der Schleifscheibe erzeugte keilförmige Profil des erzeugten Schleifabtrags.

Zur Überprüfung der gewünschten Präparationsergebnisse wurden verschiedene Messreihen an den mit Hilfe des erfindungsgemäßen Probenhalters keilförmig abgedünnten Proben vorgenommen. Da zu den zugrunde liegenden Schleif- und Poliervorgängen aus dem Stand der Technik bereits umfangreiche Erfahrungen zum Muldenschleifen an verschiedenen Probenmaterialien vorliegen, können die entsprechenden Verfahrensweisen weitestgehend übernommen werden. Unter Beachtung dieser materialspezifischen Eigenheiten konnten an allen bisher untersuchten Präparaten Stellen gefunden werden, welche ausreichend abgedünnt wurden und für TEM-Aufnahmen, insbesondere auch für hoch aufgelöste HRTEM-Aufnahmen mit einer Auflösungsgrenze bei 0.2 nm, geeignet sind.

### Bezugszeichenliste

- 10: Auflagesockel
- 20: Schlitten
- 30: Aufnahmebereich
- 40: Führung
- 50: Drehachse
- 60: drehbewegliche Scheibe
- 65: ein Schwerpunkt der drehbewegliche Scheibe
- 70: Probe
- 75: zweite Drehachse
- 80: drehbewegliches Antriebsrad
- 85: ein Schwerpunkt des drehbeweglichen Antriebsrades
- 90: rotatorischer Antrieb
- 100: Probenunterlage
- 110: Öffnung des Schlittens
- 111: Öffnung der drehbeweglichen Scheibe
- 112: Öffnung des Antriebsrades
- 114: Sichtkanal
- 120: Schleifeinheit
- 130: Drehachse des Schleifrades

- A, A': Bewegungsrichtung des Schlittens
- B, B': Pivot-Achse der Schleifeinheit
- C, C': Richtung der Drehachse des Schleifrades

- O: erste Ebene
- P: zweite Ebene

## Patentansprüche

1. Probenträger zum Bearbeiten einer Probe (70), umfassend:
einen Auflagesockel (10);
einen Schlitten (20) mit einem Aufnahmebereich (30) für die Probe (70), wobei der Schlitten (20) auf dem Auflagesockel (10) abgestützt ist;
eine Führung (40), wobei der Schlitten (20) entlang der Führung (40) beweglich angeordnet ist;
eine um eine Drehachse (50) exzentrisch drehbewegliche Scheibe (60), die mit dem Schlitten (20) wirkverbunden ist, wobei ein Schwerpunkt (65) der Scheibe (60) außerhalb der Drehachse (50) liegt; und
ein Antriebsrad (80);
**dadurch gekennzeichnet, dass**
der Schlitten (20) eine Öffnung (110) in seinem Aufnahmebereich (30) aufweist, wobei in der Öffnung (110) eine Probenunterlage (100) angeordnet ist, wobei die Probenunterlage (100) in mindestens einem optischen Spektralbereich transparent ist;
die Scheibe (60) eine Öffnung (111) aufweist; und
das Antriebsrad (80) eine Öffnung (112) aufweist, wobei eine gemeinsame Achse (114) als Sichtachse durch die Öffnung (110) des Schlittens (20), durch die Öffnung (111) der Scheibe (60) und durch die Öffnung (112) des Antriebsrads (80) verläuft.

2. Probenträger nach Anspruch 1, wobei das Antriebsrad (80) um eine zweite Drehachse (75) drehbeweglich angeordnet ist und mit der Scheibe (60) wirkverbunden ist, wobei sich ein Schwerpunkt (85) des Antriebsrads (80) auf der Drehachse (50) der Scheibe (60) befindet.

3. Probenträger nach Anspruch 2, wobei die Drehachse (50) der drehbeweglichen Scheibe (60) mit der Drehachse (75) des Antriebsrads (80) übereinstimmt.

4. Probenträger nach einem der Ansprüche 2 und 3, wobei das Antriebsrad (80) mit einem rotatorischen Antrieb (90) wirkverbunden ist.

5. Probenträger nach einem der vorhergehenden Ansprüche, wobei die Scheibe (60) und/oder das Antriebsrad (80) zumindest teilweise ein magnetisches Material aufweisen.

6. Probenträger nach einem der vorhergehenden Ansprüche, wobei der Schlitten (20) und/oder die Führung (40) ein amagnetisches Material umfassen.

7. Probenträger nach einem der vorhergehenden Ansprüche, wobei die Probenunterlage (100) vollständig aus einem optisch transparenten Material ausgebildet ist.

8. Probenträger nach einem der vorhergehenden Ansprüche, wobei die Probenunterlage (100) aus der Öffnung (110) des Schlittens (20) herausragt.

9. Vorrichtung zur Bearbeitung einer Probe (70), umfassend einen Probenträger nach einem der vorhergehenden Ansprüche und eine Schleifeinheit (120).

10. Vorrichtung nach Anspruch 9, wobei eine Drehachse (130) der Schleifeinheit (120) einen Winkel von größer als 10° zur Drehachse (50) der drehbeweglichen Scheibe (60) und/oder senkrecht zur Drehachse (75) des Antriebsrads einschließt.

11. Verfahren zum Bearbeiten einer Probe (70), umfassend:
Bereitstellen einer Vorrichtung zur Bearbeitung einer Probe (70) nach einem der Ansprüche 9 oder 10;
Anordnen einer Probe (70) auf der Probenunterlage (100);
translatorisches Bewegen der Probe (70) in einer ersten Ebene (O); und
Schleifen der Probe (70), wobei die Schleifeinheit (120) innerhalb einer zweiten Ebene (P) bewegt wird, wobei die zweite Ebene (P) mit der ersten Ebene (O) einen Winkel von größer als 50° einschließt.

## Claims

1. A sample carrier for processing a sample (70), comprising:
a support base (10);
a carriage (20) having a receiving portion (30) for said sample (70), said carriage (20) being supported on said support base (10);
a guide (40), said carriage (20) being movably disposed along said guide (40);
a disc (60) which is eccentrically rotatable about an axis of rotation (50) and which is operatively connected to the carriage (20), a centre of gravity (65) of the disc (60) being located outside the axis of rotation (50); and
one drive wheel (80);
**characterized in that**
the carriage (20) has an opening (110) in its receiving region (30), a sample support (100) being arranged in the opening (110), the sample support (100) being transparent in at least one optical spectral region;
the disk (60) has an opening (111); and
the drive wheel (80) has an opening (112), a common axis (114) extending as a viewing axis through the opening (110) of the carriage (20), through the opening (111) of the disk (60) and through the opening (112) of the drive wheel (80).

2. Sample carrier according to claim 1, wherein the drive wheel (80) is arranged so as to be rotatable about a second axis of rotation (75) and is operatively connected to the disc (60), a centre of gravity (85) of the drive wheel (80) being located on the axis of rotation (50) of the disc (60).

3. Sample carrier according to claim 2, wherein the axis of rotation (50) of the rotatable disc (60) coincides with the axis of rotation (75) of the driving wheel (80).

4. Sample carrier according to one of claims 2 and 3, wherein the drive wheel (80) is operatively connected to a rotary drive (90).

5. Sample carrier according to one of the preceding claims, wherein the disc (60) and/or the drive wheel (80) at least partially comprise a magnetic material.

6. Sample carrier according to one of the preceding claims, wherein the carriage (20) and/or the guide (40) comprise an amagnetic material.

7. Sample carrier according to one of the preceding claims, wherein the sample carrier (100) is formed entirely of an optically transparent material.

8. Sample carrier according to one of the preceding claims, the sample support (100) protruding from the opening (110) of the carriage (20).

9. Apparatus for processing a sample (70) comprising a sample carrier according to one of the preceding claims and a grinding unit (120).

10. The apparatus according to claim 9, wherein a rotational axis (130) of the grinding unit (120) includes an angle of greater than 10° to the rotational axis (50) of the rotatable disc (60) and/or perpendicular to the rotational axis (75) of the drive wheel.

11. A method of processing a sample (70) comprising:
providing an apparatus for processing a sample (70) according to any of claims 9 or 10;
arranging a sample (70) on the sample support (100);
translatorily moving the sample (70) in a first plane (O); and
grinding the sample (70), wherein the grinding unit (120) is moved within a second plane (P), the second plane (P) including an angle of greater than 50° with the first plane (O).

## Revendications

1. Support d'échantillon pour traiter un échantillon (70), comprenant :
une base de support (10) ;
un chariot (20) ayant une partie de réception (30) pour ledit échantillon (70), ledit chariot (20) étant supporté sur ladite base de support (10) ;
un guide (40), ledit chariot (20) étant disposé de manière mobile suivant ledit guide (40);
un disque (60) qui peut tourner excentriquement autour d'un axe de rotation (50) et qui est relié de manière opérationnelle au chariot (20), un centre de gravité (65) du disque (60) étant situé hors de l'axe de rotation (50) ; et
une roue motrice (80) ;
**caractérisé en ce que**
le chariot (20) présente une ouverture (110) dans sa région de réception (30), un support d'échantillon (100) étant disposé dans l'ouverture (110), le support d'échantillon (100) étant transparent dans au moins une région spectrale optique ;
le disque (60) a une ouverture (111) ; et
la roue motrice (80) présente une ouverture (112), un axe commun (114) s'étendant en tant qu'axe de visée à travers l'ouverture (110) du chariot (20), à travers l'ouverture (111) du disque (60) et à travers l'ouverture (112) de la roue motrice (80).

2. Support d'échantillon selon la revendication 1, dans lequel la roue motrice (80) est disposée de manière à pouvoir tourner autour d'un deuxième axe de rotation (75) et est reliée de manière opérationnelle au disque (60), un centre de gravité (85) de la roue motrice (80) étant situé sur l'axe de rotation (50) du disque (60).

3. Support d'échantillon selon la revendication 2, dans lequel l'axe de rotation (50) du disque rotatif (60) coïncide avec l'axe de rotation (75) de la roue motrice (80).

4. Support d'échantillon selon l'une des revendications 2 et 3, dans lequel la roue motrice (80) est reliée de manière opérationnelle à un entraînement rotatif (90).

5. Support d'échantillon selon l'une des revendications précédentes, dans lequel le disque (60) et/ou la roue motrice (80) comprennent au moins partiellement un matériau magnétique.

6. Support d'échantillon selon l'une des revendications précédentes, dans lequel le chariot (20) et/ou le guide (40) comprennent un matériau amagnétique.

7. Support d'échantillon selon l'une des revendications précédentes, dans lequel le support d'échantillon (100) est entièrement formé d'un matériau optiquement transparent.

8. Support d'échantillon selon l'une des revendications précédentes, le support d'échantillon (100) dépassant de l'ouverture (110) du chariot (20).

9. Dispositif de traitement d'un échantillon (70) comprenant un support d'échantillon selon l'une des revendications précédentes et une unité de broyage (120).

10. Dispositif selon la revendication 9, dans lequel un axe de rotation (130) de l'unité de meulage (120) présente un angle supérieur à 10° par rapport à l'axe de rotation (50) du disque rotatif (60) et/ou perpendiculaire à l'axe de rotation (75) de la roue directrice.

11. Procédé de traitement d'un échantillon (70) comprenant : la
fourniture d'un appareil pour traiter un échantillon (70) selon l'une quelconque des revendications 9 ou 10 ;
la disposition d'un échantillon (70) sur le support d'échantillon (100) ; le déplacement translatoire de l'échantillon (70) dans un premier plan (O) ; et la
rectification de l'échantillon (70), l'unité de rectification (120) étant déplacée dans un deuxième plan (P), le deuxième plan (P) incluant un angle supérieur à 50° avec le premier plan (O).
